Europäisches Patentamt

European Patent Office

Office européen des brevets

(19)

(11) Veröffentlichungsnummer: **0 151 699**

**A1**

(12) # EUROPÄISCHE PATENTANMELDUNG

(21) Anmeldenummer: 84113130.3

(22) Anmeldetag: 31.10.84

(51) Int. Cl.⁴: **B 23 D 33/12**

(30) Priorität: 14.02.84 CH 715/84

(43) Veröffentlichungstag der Anmeldung:
21.08.85 Patentblatt 85/34

(84) Benannte Vertragsstaaten:
AT BE CH DE FR GB IT LI LU NL SE

(71) Anmelder: Schenk & Co.
Gewerbestrasse 10
CH-6330 Cham(CH)

(72) Erfinder: Schenk, Max
In den Bünten
CH-5634 Merenschwand(CH)

(74) Vertreter: Blum, Rudolf Emil Ernst et al,
c/o E. Blum & Co Patentanwälte Vorderberg 11
CH-8044 Zürich(CH)

(54) Verfahren und Vorrichtung zur Ausführung von Schneidoperationen.

(57) Damit teuere Zusatzapparaturen vermieden und das Schneidgut rasch und einfach genauestens positioniert werden können, wird das bewegliche Messer (4) zur Positionierung des Schneidguts parallel zu dessen Oberfläche angeordnet. Zur Ausführung des Schnitts erfolgt dann die Verschiebung des Messers (4) in eine Arbeits-Ausgangsstellung. Der Schnitt wird dann unter Einhaltung eines Scherwinkels zwischen Messer (4) und Gegenmesser (5) vorgenommen. Ein Exzenterantrieb mit den Exzentern (8,8'), den Uebertragungsstangen (9,9'), den das Messer tragenden Kopplungsgliedern (6) und den Führungen (7) für die Kopplungsglieder (6) bewirken die gewünschte Bewegung des Messers.

Fig. 2

EP 0 151 699 A1

Croydon Printing Company Ltd

- 1 -

Verfahren und Vorrichtung zur Ausführung von Schneidoperationen
-------------------------------------------------

Die vorliegende Erfindung bezieht sich auf ein Verfahren und eine Vorrichtung zum Ausführen von Schneidoperationen bei Messer-Scheren mit einem beweglichen Messer und einem an einem Schneidtisch vorgesehenen Gegenmesser.

Solche Messerscheren, insbesondere Tafelscheren zum Zerschneiden von flächigem Schneidgut sind bekannt.

Damit der Schnitt einwandfrei ausgeführt wird, muss der schneidende Abschnitt der Klinge des beweglichen Messers das Schneidgut in einem bestimmten, vom jeweiligen Schneidgutmaterial abhängigen Schnitt-Winkel durchschneiden.

Ist der Schnittwinkel zu klein, bedeutet dies, dass im Extremfall der schneidende Klingenabschnitt entlang der gesamten auszuführenden Schnittlänge auf der Schneidgutoberfläche zu Beginn des Schnitts aufliegt. Entsprechend ist die aufzubringende Schneidkraft zur Durchtrennung des Schneidguts auf einen Schlag sehr gross. Bei grossen Messerscheren führt dies zu einem aufwendigen und teueren Messerantrieb. Entsprechende Anforderungen werden dann auch an das Gegenmesser und an die Schneidtischkonstruktion gestellt.

Ist der Schnittwinkel zu gross, verformt sich das Schneidgut entlang der Schnittlinie, da beträchtliche Kraftkomponenten der Schnittkraft in der Ebene des Schneidguts wirken.

Uebliche Tafelscheren besitzen deshalb ein an einem Ende angelenktes Messer mit bogenförmiger Klinge. Die Klinge ist derart geformt, dass je nach zu zerschneidendem Material bei fortschreitendem Schnitt der jeweils schneidende Klingenabschnitt mit der Schneidgutoberfläche einen bestimmten Winkel einschliesst.

Grössere Messerscheren weisen in der Regel ein bewegliches Messer auf, welches senkrecht zur Schneidtischoberfläche verschoben wird. Die Klinge ist gerade und der Schnittwinkel konstant.

Es ist nun äusserst schwierig, grösseres Schneidgut z.B. einem Anriss entlang präzise zu zerscheiden. Bei der Positionierung des Schneidguts bezüglich dem beweglichen Messer ist es problematisch abzuschätzen, wo das weiter von der Schneidgutoberfläche sich befindende Klingenende auf ihr auftreten wird.

Verschiedene Hilfsmittel sind vorgeschlagen worden, um diesen Nachteil zu überwinden. Ein verstellbarer Anschlag ist nur dann nützlich, wenn der Schnitt parallel zu einer Seite des Schneidguts geführt werden soll. Kleine Schnittwinkel sind aus vorstehenden Gründen speziell bei grösseren, etwa Bleche verarbeitenden Messer-Scheren unökonomisch. Optisches Markieren von Punkten der Schnittlinie auf der Schneidgutoberfläche, z.B. durch Schattenprojektion oder mit Hilfe einer Lichtmarke, ist aufwendig, sehr teuer und schliesst Parallaxenfehler nicht immer vollständig aus.

Zweck der vorliegenden Erfindung ist es nun, diese Nachteile zu überwinden. Dazu zeichnet sich das Verfahren erfindungsgemäss dadurch aus, dass die beiden Messer in eine zur Positionierung des Schneidguts bezüglich dem beweglichen Messer günstige gegenseitige Lage und anschliessend, zur Ausführung des Schnitts, in eine weitere, einen Scherwinkel einschliessende Arbeits-Ausgangsstellung bringbar sind und dass der Schervorgang unter Einhaltung eines Scherwinkels von Messer und Gegenmesser ausgeführt wird.

In der Grundstellung befindet sich das Messer mit seiner gerade verlaufenden Klinge in einem gewissen Abstand über und parallel zur Schneidgutoberfläche. Auch dickeres Schneidgut kann dann noch unter dem Messer hindurchgeschoben werden. Die Feinpositionierung des Schneidguts bezüglich dem beweglichen Messer kann leicht und innerhalb kürzester Zeit erfolgen, da sich die Messerklinge entlang der gesamten auszuführenden Schnittlänge in geringem Abstand über der Schneidgutoberfläche befindet. Schneiden genau entlang z.B. einem Anriss ist gewährleistet.

Zur Ausführung des Schnitts wird das Messer in eine Arbeits-Ausgangsstellung gebracht. Diese ist erreicht, wenn das Messer den vorbestimmten Schnittwinkel zu Schneidgutoberfläche einnimmt. Der Schnitt erfolgt, sobald das Messer gegen die Schneidgutoberfläche nach unten geführt wird. Nach Beendigung des Schnitts wird das Messer wieder in seine Grundstellung gebracht.

Eine Vorrichtung zur Ausführung des Verfahrens ist gekennzeichnet durch Mittel, um die beiden Messer in eine zur Positionierung des Schneidguts bezüglich dem beweglichen Messer günstige gegenseitige Lage zu bringen und um die beiden Messer, zur Ausführung des Schnitts, in eine weitere, einen Scherwinkel einschliessende Arbeits-Ausgangsstellung zu bringen.

Bei einem bevorzugten Ausführungsbeispiel umfassen diese Mittel am Gestell vorgesehene, senkrecht zum Gegenmesser verlaufende Führungen und an den Führungen laufende, das bewegliche Messer tragende Kopplungsglieder sowie Bewegung des Messers bewirkende, auf einer Antriebswelle angebrachte Exzenter und je einen Exzenter mit einem Kopplungsglied verbindende Steuerstangen. Die Exzenter sind in Drehrichtung zueinander versetzt auf der Antriebswelle angeordnet; die Steuerstangen weisen verschiedene Länge auf. Weiter ist die kürzere Steuerstange mit dem beim Schneidvorgang vorlaufenden Exzenter verbunden.

Die Führungen sind als am Gestell befestigte, senkrecht zum Gegenmesser verlaufende, zylindrisch ausgestaltete Führungsstangen ausgebildet. Die Kopplungsglieder weisen je eine Bohrung auf, durch welche die zugehörige Führungsstange aufgenommen wird. Dadurch wird gleitendes Verschieben der Kopplungsglieder an ihren jeweils zugeordneten Führungsstangen ermöglicht. Alternativ können die Kopplungsglieder z.B. in an Teilen des Gestells entlang verlaufenden Nuten gleiten.

Durch Exzenter und Führungsstangen wird sichergestellt, dass jedes Kopplungsglied sich derart an seinen Führungen entlang bewegt, dass die gewünschte, oben beschriebene Bewegung des beweglichen Messers resultiert.

Die an den Exzentern befestigten Uebertragungsstangen bewirken eine Oszillation der Kopplungsglieder entlang ihrer Führungen.

Läuft nun ein Exzenter dem anderen vor, d.h. ist er gegenüber dem anderen auf der Antriebswelle in Drehrichtung versetzt angeordnet, bedeutet dies, dass das Messer beim Schneidvorgang gegenüber der Schneidtischoberfläche und bei flächigem Schneidgut zugleich gegenüber der Schneidgutoberfläche, schräggestellt ist.

Bei der Rückkehr des beweglichen Messers in Grundstellung muss es eine zur Schneidtischoberfläche parallele Lage einnehmen. Da der Vorlauf des einen Exzenters konstant ist, wird ein kompensierender Ausgleich dadurch geschaffen, dass die am vorlaufenden Exzenter befestigte Uebertragungsstange kürzer ist als die am anderen Exzenter angebrachte.

Es ergibt sich folgender Effekt:

Die Schrägstellung des beweglichen Messers wird durch eine mit dem vorlaufenden Exzenter verbundene kürzere Uebertragungsstange beim Schneidvorgang vergrössert und bei entgegengesetzter Bewegungsrichtung in Grundstellung mindestens annähernd beseitigt.

Anstelle von verschieden langen Uebertragungsstangen kann alternativ auch folgende Konstruktion vorgesehen werden: Gleichlange Uebertragungsstangen; deren Befestigung erfolgt am Exzenter jedoch mit in einem gewissen Bereich frei wählbarem Abstand von der Längsachse der angetriebenen Welle.

Beispielsweise ist es möglich, die Uebertragungsstange mittels Schraubenbolzen in einer auf einem Radius liegenden Nut eines scheibenförmigen Exzenters zu fixieren. Eine Aenderung des Befestigungspunktes der einen Uebertragungsstange bewirkt einen anderen Scherwinkel des beweglichen Messers.

Anstelle eines Exzenterantriebs können auch zwei unabhängig voneinander gesteuerte, auf die Uebertragungsstangen einwirkende, z.B. hydraulisch angetriebene Arbeitszylinder verwendet werden. Die Uebertragungsstangen können dann gleiche Länge aufweisen.

Weiter ist es denkbar, dass ein an den Kopplungsgliedern befestigter Messerbalken in jeder Lage mit dem Gegenmesser einen Scherwinkel einschliesst. Damit das bewegliche Messer zur Positionierung des Schneidguts parallel zu dessen Oberfläche ausgerichtet werden kann, ist das Messer an seinem einen Ende am Messerbalken angelenkt und an seinem anderen Ende an einer Kolbenstange eines seinerseits am Messerbalken angebrachten Arbeitszylinders befestigt. Beim Positionieren des Schneidguts wird das bewegliche Messer mit Hilfe des Arbeitszylinders derart verschwenkt, dass es parallel zur Schneidgutoberfläche verläuft. Der Schnitt wird nach Rückverschwenkung des Messers durch Parallelverschiebung des Messerbalkens ausgeführt. Die Bewegung der Kopplungsglieder wird durch einen konventionellen Antrieb bewirkt. Der Vorteil solch einer Anordnung besteht darin, dass konventionelle Messerscheren, insbesondere Tafelscheren zur Ausführung des erfindungsgemässen Verfahrens mit geringem Aufwand umgerüstet werden können.

Die Erfindung wird nachstehend anhand eines in den Zeichnungen dargestellten Ausführungsbeispiels noch etwas näher erläutert.

Es zeigt:

Fig. 1 schematisch eine perspektivische Ansicht einer Tafelschere,

Fig. 2 einen entlang der Linie A-A verlaufenden Querschnitt durch das Ausführungsbeispiel von Fig. 1, und

Fig. 3a - 3d schematisch die Position des beweglichen Messers bei verschiedenen Stellungen der Antriebswelle.

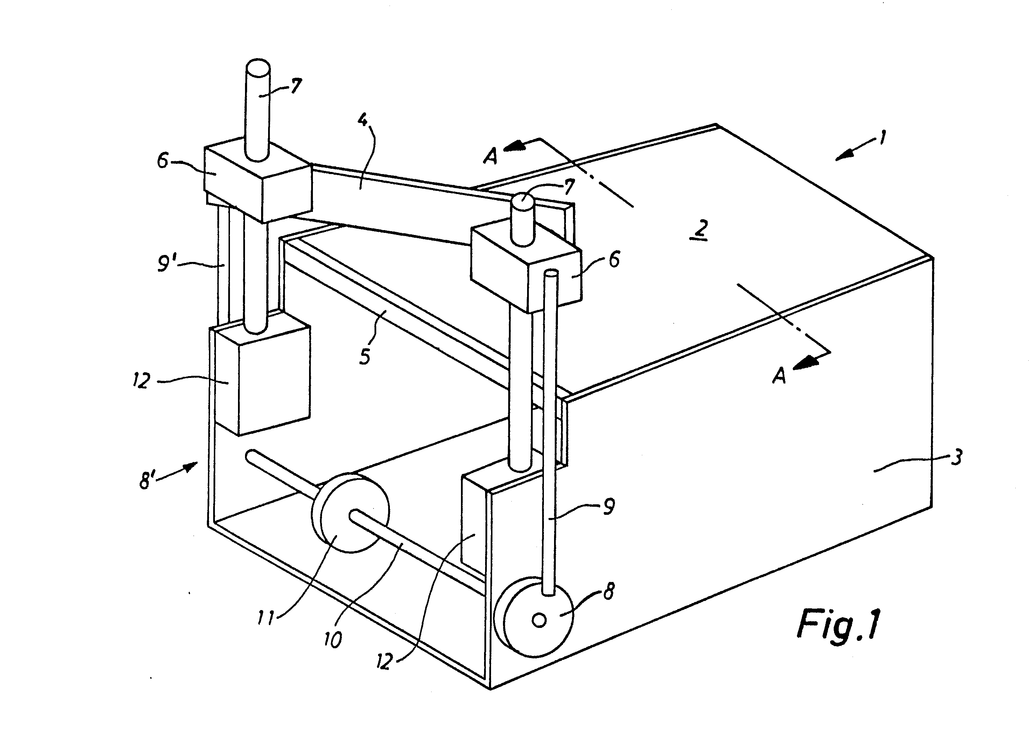

In Figur 1 ist eine mit 1 bezeichnete Tafelschere dargestellt. Sie weist ein Schneidtischblatt 2, ein Gestell 3, ein bewegliches Messer 4 sowie ein Gegenmesser 5 auf. Das bewegliche Messer 4 ist an Kopplungsgliedern 6 angebracht; letztere sind mit Bohrungen versehen, durch welche die Führungen 7 hindurchragen. Mittels Exzenter 8, 8' und Uebertragungsstangen 9, 9' können die Kopplungsglieder 6 in solch eine Bewegung versetzt werden, dass das bewegliche Messer 4 die gewünschte Bewegung ausführt. Die Exzenter 8, 8' sind auf einer Antriebswelle 10 angeordnet. Letztere kann durch einen konventionellen Antrieb, z.B. mittels eines angedeuteten Zahnrads 11, in Rotation versetzt werden. Die als zylindrische Führungsstangen ausgebildeten Führungen 7 sind mit Hilfe von Befestigungsblöcken 12 am Gestell 3 befestigt.

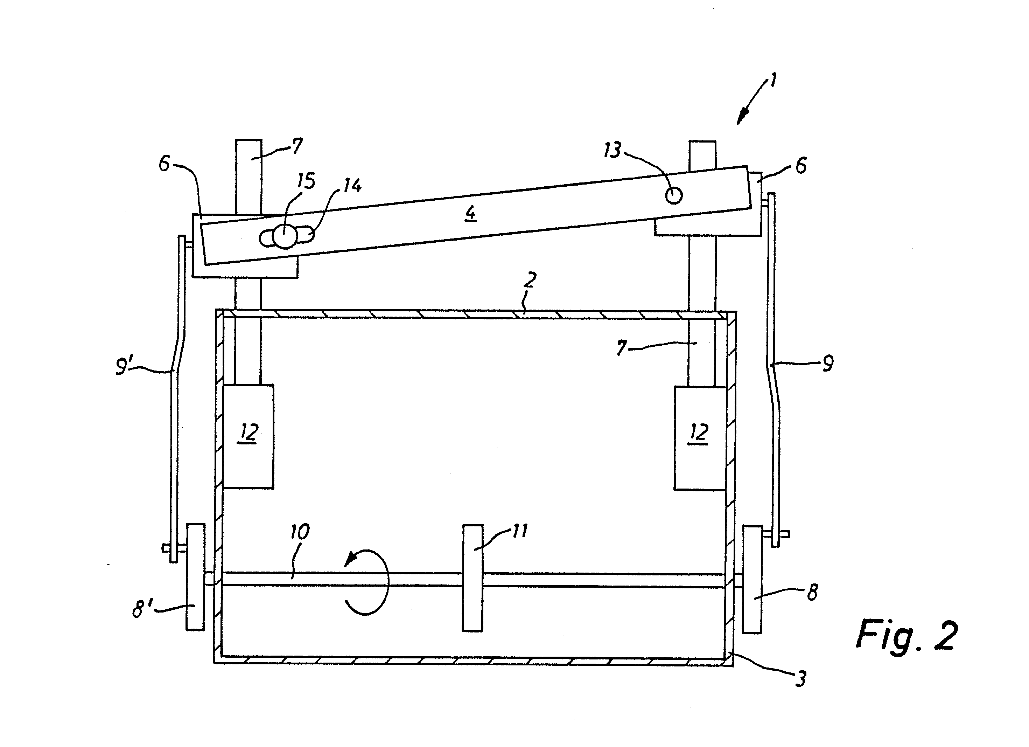

Figur 2 zeigt einen Querschnitt entlang der Linie A-A von Fig. 1. Das bewegliche Messer 4 befindet sich in Arbeits-Ausgangsstellung und schliesst mit den nicht dargestellten, aber parallel zum Schneidtischblatt verlaufenden Gegenmesser 5 einen Scherwinkel ein. Die Schrägstellung des beweglichen Messers 4 wird einerseits bewirkt durch den Vorlauf des Exzenters 8' gegenüber dem Exzenter 8 und andererseits, wie aus der Figur ersichtlich, durch die verschiedene Länge der Uebertragungsstange 9',9. Die mit dem Exzenter 8' verbundene Uebertragungsstange 9' ist kürzer als die mit dem Exzenter 8 verbundene Uebertragungsstange 9. Durch den Pfeil wird die Drehrichtung der angetriebenen Welle 10 angedeutet. Der Vorlauf des Exzenters 8' gegenüber dem Exzenter 8 ist auf diese Drehrichtung bezogen. Das bewegliche Meser 4 ist mit Hilfe der Bolzen 13 und 15 an den Kopplungsgliedern 6 angebracht. Der Bolzen 15 kann sich entlang einer Nut 14 des Messers 4 verschieben. Damit wird sichergestellt, dass das Messer verschiedene Winkel mit dem Gegenmesser 5 bzw. mit dem Schneidtischblatt 2 einschliessen kann.

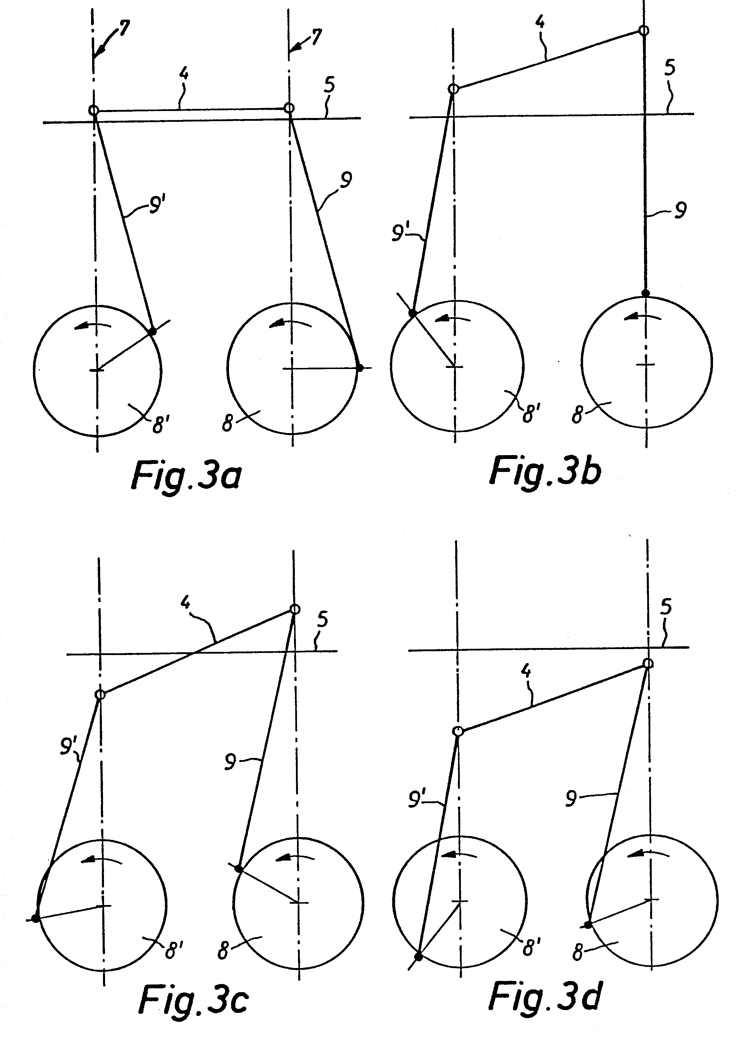

In den Figuren 3a-3d ist schematisch ein Arbeitszyklus mit verschiedenen Stellungen vom beweglichen Messer 4, Uebertragungsstangen 9, 9' und Exzentern 8, 8' dargestellt.

Figur 3a zeigt das bewegliche Messer in Grundstellung. Es ist parallel zum Gegenmesser 5 angeordnet. Diese Parallelstellung trotz des Vorlaufs des Exzenters 8' gegenüber dem Exzenter 8 ist darum möglich, weil die Uebertragungsstange 9' kürzer ist als die Uebertragungsstange 9. Zwischen beweglichem Messer 4 und Gegenmesser 5 kann das Schneidgut hindurchgeschoben und mit grosser Genauigkeit positioniert werden.

Figur 3b zeigt das bewegliche Messer 4 in Arbeits-Ausgangsstellung. Seine Schrägstellung wird bewirkt durch den Vorlauf des Exzenters 8' gegenüber dem Exzenter 8 und zusätzlich verstärkt durch die Verkürzung der Uebertragungsstange 9' gegenüber der Uebertragungsstange 9.

Figur 3c zeigt die Stellung des beweglichen Messers während dem Schneidvorgang.

Figur 3d zeigt die Stellung des beweglichen Messers 4 nach Beendigung des Schneidvorgangs.

Je nach gewünschtem Scherwinkel kann das Verhältnis Exzentervorlauf zu Längenunterschied der Uebertragungsstangen festgelegt werden.

Patentansprüche
-----------------------------

1. Verfahren zum Ausführen von Schneidoperationen bei Messer-Scheren, insbesondere Tafelscheren, mit einem beweglichen Messer, einem Gegenmesser und einem Auflagetisch, dadurch gekennzeichnet, dass die beiden Messer in eine zur Positionierung des Schneidguts bezüglich dem beweglichen Messer günstige gegenseitige Lage und anschliessend zur Ausführung des Schnitts, in eine weitere, einen Scherwinkel einschliessende Arbeits-Ausgangsstellung bringbar sind und dass der Schervorgang unter Einhaltung eines Scherwinkels von Messer und Gegenmesser ausgeführt ist.

2. Verfahren nach Anspruch 1, dadurch gekennzeichnet, dass zur Positionierung des Schneidguts bezüglich dem beweglichen Messer letzteres mindestens annähernd parallel zum Gegenmesser verlaufend unmittelbar über die Schneidgutoberfläche und anschliessend zur Ausführung des Schnitts in eine mit der Gegenscherkante einen vorbestimmten Scherwinkel einschliessende Arbeits-Ausgangsstellung bringbar ist und von letzterer aus unter einem Scherwinkel am Gegenmesser vorbeigeführt wird.

3. Messer-Schere, insbesondere Tafelschere mit einem Gestell, einem beweglichen Messer und einem an einem Schneidtisch vorgesehenen Gegenmesser, gekennzeichnet durch Mittel, um die beiden Messer in eine zur Positionierung des Schneidguts bezüglich dem beweglichen Messer günstige gegenseitige Lage zu bringen und um die Messer, zur Ausführung des Schnitts, in eine weitere,einen Scherwinkel einschliessende Arbeits-Ausgangsstellung zu bringen.

4. Messer-Schere, insbesondere Tafelschere nach Anspruch 3, gekennzeichnet durch Mittel um das zur Durchführung des Schnitts unter dem jeweiligen Schneidwinkel bewegliche Messer zur Positionierung des Schneidguts vorübergehend in eine Stellung mindestens annähernd parallel zur Schneidgutoberfläche zu bringen.

5. Messer-Schere, insbesondere Tafelschere nach Anspruch 3, dadurch gekennzeichnet, dass die Mittel am Gestell vorgesehene Führungen und an den Führungen laufende, das bewegliche Messer tragende Kopplungsglieder sowie Bewegung des Messers bewirkende, auf einer Antriebswelle angebrachte Exzenter und je einen Exzenter mit einem Kopplungsglied verbindende Steuerstangen enthalten.

6. Messer-Schere, insbesondere Tafelschere nach Anspruch 5, dadurch gekennzeichnet, dass die Exzenter in Drehrichtung zueinander versetzt auf der Welle angeordnet sind.

7. Messer-Schere, insbesondere Tafelschere nach Anspruch 5, dadurch gekennzeichnet, dass die Steuerstangen verschiedene Längen aufweisen.

8. Messer-Schere, insbesondere Tafelschere nach Anspruch 5, dadurch gekennzeichnet, dass die Exzenter verschiedene Exzentrizität aufweisen.

9. Messer-Schere, insbesondere Tafelschere nach den Ansprüchen 6 und 7, dadurch gekennzeichnet, dass die kürzere Steuerstange mit dem beim Schneidvorgang vorlaufenden Exzenter verbunden ist.

10. Messer-Schere, insbesondere Tafelschere nach Anspruch 3, dadurch gekennzeichnet, dass die Mittel am Rahmen vorgesehene Führungen und an den Führungen laufende, das bewegliche Messer tragende Kopplungsglieder einwirkende, am Gestell angebrachte Druckzylinder aufweisen.

11. Messer-Schere, insbesondere Tafelschere nach Anspruch 3, dadurch gekennzeichnet, dass die Mittel am Gestell vorgesehene Führungen und einen an den Führungen laufenden, das bewegliche Messer an ihm angelenkt tragenden Messerbalken sowie einen an letzterem schwenkbar befestigten, mit einer mit dem der Anlenkstelle gegenüberliegenden Messerende verbundenen Kolbenstange versehenen Druckzylinder aufweisen.

0151699

Fig.1

Fig. 2

0151699

*Fig.3a*

*Fig.3b*

*Fig.3c*

*Fig.3d*

**0151699**

Nummer der Anmeldung

# EUROPÄISCHER RECHERCHENBERICHT

Europäisches
Patentamt

EP 84 11 3130

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | GB-A- 566 522 (SMITH & SON LTD.) * Insgesamt * | 1,3 | B 23 D 33/12 |
| A | DE-B-1 158 476 (OTTE) | | |
| A | US-A-3 530 761 (ERWIN) | | |
| A | DE-B-1 035 448 (ROSE) | | |

|  | RECHERCHIERTE SACHGEBIETE (Int. Cl.4) |
|---|---|
|  | B 23 D<br>B 26 D |

Der vorliegende Recherchenbericht wurde für alle Patentansprüche erstellt.

| Recherchenort<br>DEN HAAG | Abschlußdatum der Recherche<br>13-12-1984 | Prüfer<br>BERGHMANS H.F. |
|---|---|---|